# DEMANDE DE BREVET EUROPEEN

(11) **EP 0 942 165 A1**
(43) Date de publication de la demande: **15.09.1999**
(21) Numéro de dépôt: 99400578.3
(22) Date de dépôt: 10.03.1999
(51) Int. Cl.: F02K 1/70

(54) **Inverseur de poussée de turboréacteur a portes formant écopes associées à une grille mobile**

(30) Priorité: 12.03.1998 FR 9803035
(71) Demandeur: Hispano-Suiza Aérostructures, 76700 Gonfreville l'Orcher (FR)
(72) Inventeur: Vauchel, Guy Bernard, 76610 Le Havre (FR)

(57) **Abrégé**

Un inverseur de poussée de turboréacteur comporte des portes creuses pivotantes (3), intégrées en jet direct dans le capotage extérieur de la nacelle et constituant en jet inversé des obstacles de déviation de flux en formant écopes. Une grille déflectrice mobile (23) constituée d'aubes est associée à chaque porte (3). La grille mobile (23) est articulée autour d'un pivot (24) et comporte au moins une partie amont formant déflecteur (26) qui vient en débordement de la surface externe du panneau externe (4) de la porte (3) en mode d'ouverture de la porte (3), de manière à éviter toute interférence entre le flux d'échappement sortant de la porte (3) et le flux dévié à l'extérieur de la porte (3) en position ouverte.

## Description

La présente invention concerne un dispositif d'inversion de poussée de turboréacteur à double flux. Le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple, mais dans d'autre cas, la paroi externe ne canalise que le flux secondaire, dans le cas de nacelles dites à flux séparés.

Une paroi peut également caréner l'extérieur du moteur, c'est à dire l'extérieur du carter qui entoure la soufflante et l'extérieur de la paroi extérieure du conduit décrit ci-dessus, ceci dans le but de minimiser la trainée de l'ensemble propulsif. Ceci est notamment le cas pour des ensembles propulsifs rapportés sur l'extérieur d'aéronef, particulièrement lorsque ces ensembles propulsifs sont attachés sous les ailes ou à l'arrière du fuselage.

La demande de brevet français 96.09705 décrit un exemple de réalisation, illustré par la figure 1 des dessins joints, d'un inverseur de poussée à portes formant écopes, associé à un turboréacteur à double flux.

Le dispositif d'inversion est constitué d'un ensemble mobile et d'une structure fixe. L'ensemble mobile est constitué de portes creuses 3 formant une partie mobile 2 et constituant en position jet direct, une partie du capotage extérieur de la nacelle. La structure fixe est constituée d'une partie amont 6 en amont des portes, d'une partie aval 7 en aval des portes 3 et de poutres qui relient la partie amont 6 à la partie aval 7, la structure fixe réalisant elle aussi une partie du capotage extérieur.

Les portes 3 sont montées sur une circonférence du capotage extérieur et sont montées pivotantes dans une zone aval de leurs parois latérales sur les poutres reliant la partie aval 7 à la partie amont 6 du capotage extérieur situées de part et d'autre de ces portes, ces parois latérales relient la partie extérieure ou panneau externe 4 des portes 3, qui constitue une partie de la paroi extérieure de la nacelle à la partie intérieure 5 des portes 3 qui constitue une partie de la paroi extérieure du conduit.

La partie amont 6 de structure fixe comporte un cadre avant 8 qui peut servir de support aux moyens de commande des déplacements des portes 3, constitués par exemple par des vérins. Ces moyens de commande de déplacements des portes 3 peuvent de même être situés à d'autres endroits en périphérie de la porte 3 par exemple en aval de celle-ci. Dans ce cas c'est la structure aval 7 de structure fixe qui peut supporter les organes de commande.

En position activée, les portes 3 basculent de telle façon que la partie des portes situées en amont des pivots 9 vient obstruer plus ou moins totalement le conduit tout en dégageant un passage dans le capotage extérieur de manière à permettre au flux secondaire respectivement 13 et 14 d'être canalisé dans une direction centrifuge par rapport à l'axe du conduit d'une part dans le conduit ou tuyère 10 formé par la structure de la porte 3 et entre le bord de déviation et l'externe de la structure externe 4 de la porte 3 d'autre part. La partie aval des portes vient au voisinage de l'externe du capotage extérieur. L'angle de pivotement des portes est ajusté de manière à permettre le passage du flux et de manière à réduire fortement voire à supprimer la poussée de ce flux, et à générer une contre poussée en produisant une composante du flux dévié vers l'amont.

La structure externe de l'externe 4 des portes 3 du type d'inverseur de poussée décrit ci-dessus en jet inversé offre une rampe au flux d'échappement 14 passant entre le bord de déviation et l'externe de la structure externe de la porte et vient rencontrer le flux 13b sortant de l'interne 10 de la porte. Le flux 14 minimise ainsi la direction prise par le flux 13b vers l'avant de la nacelle en venant se fondre sur lui.

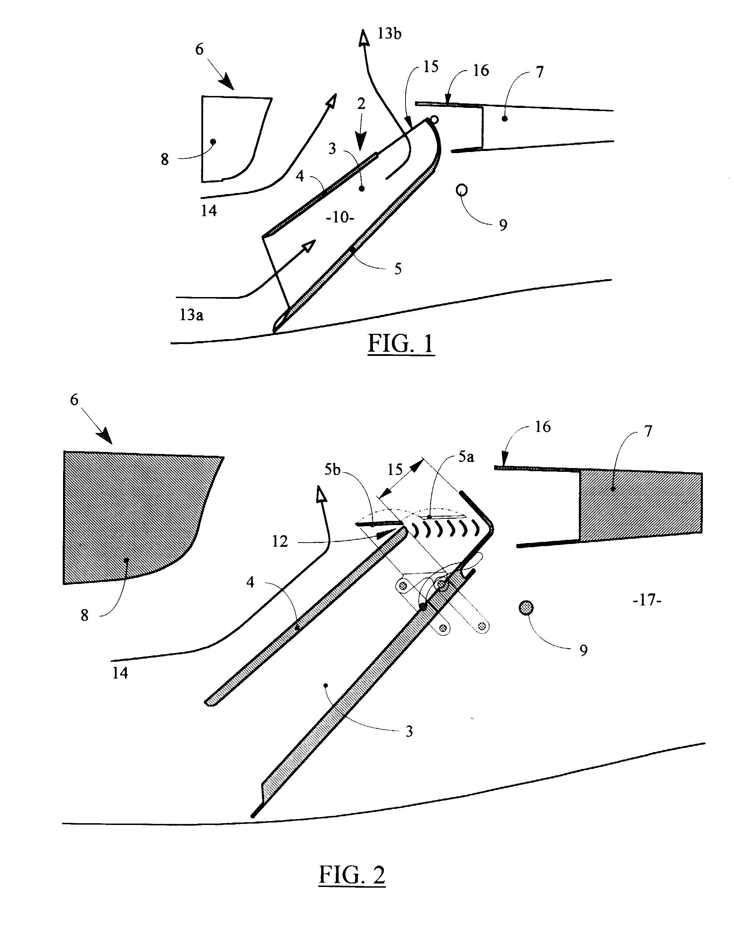

La demande de brevet français 97.06943 résoud ce problème par la mise en place d'un déflecteur mobile 5b, lors de l'ouverture de la porte au-dessus de la surface externe 4 de la porte 3 de manière à limiter ou éviter toute interférence entre le flux d'échappement de la porte et le flux dévié à l'extérieur de la porte. La figure 2 montre un exemple d'un mode de réalisation de cette invention en position jet inversé.

Le type de réalisation du déflecteur 5b décrit dans la demande 97.06943, pour des raisons de stockage et de cinématique vient tout ou en partie en recouvrement des aubes de grilles en jet direct. Lors de la manoeuvre d'ouverture, au moins la partie aval du déflecteur part d'une position de chevauchement d'aubes à une position de recouvrement de la structure externe de la porte. Pendant toute la manoeuvre d'inversion, l'ouverture d'échappement 15 du flux 13 de la porte ne peut être entièrement dégagé et permettre un libre passage du flux d'inversion. Il peut en résulter des problèmes au niveau des performances du turboréacteur car la section du canal annulaire 17 obstruée par la porte 3 risque de ne pas pouvoir être compensée par la section de passage du flux libérée par la porte.

L'environnement du déflecteur en position jet direct ne permet pas ou très difficilement de donner au déflecteur une forme optimale souhaitée par l'homme du métier.

L'étanchéité 12 entre l'aval du déflecteur 5 et l'externe de la surface externe 4, si elle n'est pas bien appliquée, peut générer quelques dégradations des performances par le passage d'une partie du flux circulant au-dessus de la surface externe de la porte vers le flux sortant de la porte.

L'entrainement du déflecteur 5 est réalisé par un système d'embiellage positionné à l'externe des flancs de porte 3 dont la manoeuvre de commande est assujettie à la porte. La technologie de guidage par quatre bielles implique une multiplicité de pièces de manoeuvre et nécessite une réalisation rigoureuse afin d'assurer le niveau de fiabilité réclamé sur inverseur.

Enfin la disposition des aubes fixes est définie pour obtenir les performances optimales en jet inversé. La direction que prend le flux pendant l'ouverture des portes 3 ne peut être orientée de la façon jugée meilleure par l'homme de métier vers l'avant de la nacelle.

Un des buts de l'invention est d'obtenir un accroissement des performances aérodynamiques des portes écopes, lors du fonctionnement en inversion de poussée de l'inverseur notamment lors de la manoeuvre d'ouverture, sans encourir les inconvénients des solutions connues antérieures.

Les buts sont atteints conformément à l'invention par un inverseur de poussée de turboréacteur à portes formant écopes du type précité caractérisé en ce que la porte est associée à au moins une grille déflectrice mobile articulée autour d'un pivot et dont au moins la partie amont formant déflecteur vient en débordement de la surface externe du panneau externe de la porte en mode d'ouverture de la porte de manière à éviter toute interférence entre le flux d'échappement sortant de la porte et le flux dévié à l'extérieur de la porte en position ouverte.

Ces dispositions remarquables entrainent de nombreux avantages :
- la mobilité de la grille permet au début de la manoeuvre d'inversion d'orienter plus fortement les aubes vers l'amont de la nacelle qu'en fin d'ouverture. Il en résulte un guidage optimal de la section du flux d'échappement traversant la structure de la porte vers l'avant de la nacelle et du fait que la direction du flux est moins fortement dirigée vers la casquette fixe de recouvrement de la section d'échappement de la porte qui crée un phénomène de bouchon, l'efficacité aérodynamique de l'ensemble de la nacelle est améliorée ;
- une bonne fiabilité de la technologie d'entrainement de la grille mobile est obtenue ;
- en position d'inversion, l'étanchéité est assurée entre le bord amont de la grille mobile et le bord aval de la structure externe de porte ;
- pendant la phase d'inversion, l'obstruction d'une partie de l'ouverture de l'échappement du flux sortant de la porte est évitée et lors de la manoeuvre d'inversion vers l'avant de la nacelle, un meilleur guidage du flux d'échappement sortant dans la porte est assuré.

D'autres caractéristiques et avantages de l'invention seront mieux compris à la lecture de la description qui va suivre des modes de réalisation de l'invention, en référence aux dessins annexés sur lesquels :
- la figure 1 représente une demi-vue schématique, en coupe longitudinale par un plan passant par l'axe de rotation d'un turboréacteur associé, d'un inverseur de poussée à portes écopes pivotantes, en position ouverte, d'un type connu et qui a fait précédemment l'objet d'une description.
- la figure 2 représente, dans une vue analogue à celle de la figure 1, un inverseur de poussée à portes écopes comportant un déflecteur mobile, d'un type connu et qui a fait précédemment l'objet d'une description.
- les figures 3 et 4 représentent en perspective le concept défini suivant les figures 5 à 7.
- la figure 5 représente dans une vue analogue à celle de la figure 1, en position fermée, un inverseur de poussée à portes écopes selon un mode de réalisation de l'invention.
- la figure 6 représente le mode de réalisation décrit suivant la figure 5 en mode jet inversé.
- la figure 7 représente le mode de réalisation décrit suivant la figure 5 dans une position d'ouverture intermédiaire.
- la figure 8 représente, dans une vue analogue à celle de la figure 1, en position fermée, un inverseur de poussée à portes écopes selon un autre mode de réalisation de l'invention.
- la figure 9 représente le mode de réalisation décrit suivant la figure 8 en mode jet inversé.
- la figure 10 représente, dans une vue analogue à celle de la figure 1, en position fermée, un inverseur de poussée à portes écopes selon un autre mode de réalisation de l'invention.
- la figure 11 représente le mode de réalisation décrit suivant la figure 10 en mode jet inversé.

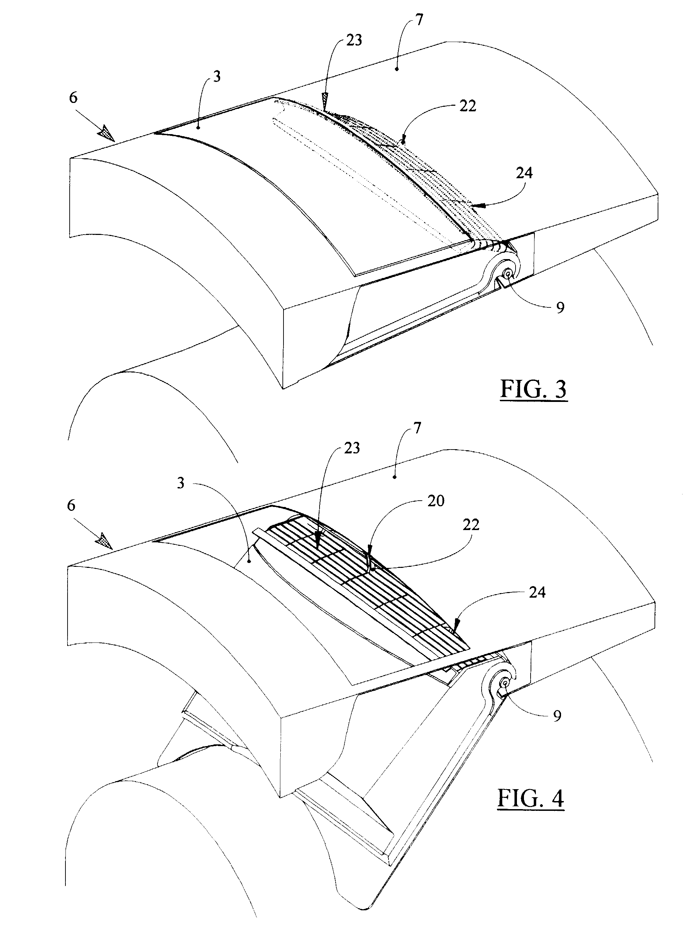

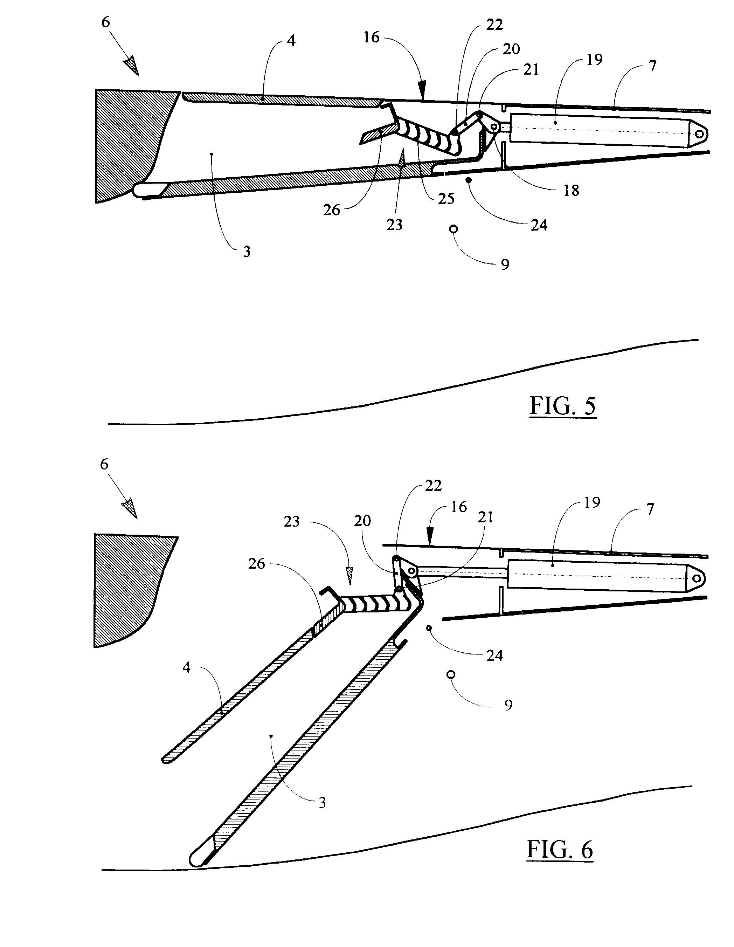

Selon un mode de réalisation de l'invention représenté sur les figures 3 à7, une porte écope 3 d'un inverseur de poussée de turboréacteur à double flux est articulée autour d'un axe de rotation 9 porté par les poutres latérales de la structure fixe 6 de l'inverseur. Le système de commande 19 de la porte 3 entraîne au point 21 par l'intermédiaire d'au moins une bielle 20 une grille mobile 23 au point 22 articulée autour d'un axe de rotation 24 porté par la structure interne de la porte 3. En position jet direct la grille mobile est stockée à l'intérieur de la structure de la porte 3 et l'amont de la casquette fixe 16 vient en interface avec l'aval externe de la structure externe 4 de la porte 3. La grille mobile 23 est constituée d'aubes 25 dont l'aube amont 26 forme un déflecteur au flux d'échappement lors de l'inversion.

Lors de la manoeuvre d'ouverture le vérin 19 entraine au point 18 la porte 3 en rotation autour de son pivot 9 et commence simultanément la manoeuvre de la bielle 20 au point 22. A son tour la bielle 20 au point 21 entraine en rotation autour de son axe 24 la grille mobile 23 jusqu'à la position désirée par l'homme de métier.

Une extension interne de forme adaptée de l'amont du pied du déflecteur 26 peut permettre de couvrir le jeu existant entre les deux parties en mouvement.

Ce principe peut être employé comme butée de l'ensemble grille mobile 23 en mode jet inversé notamment lorsque la définition des aubes 25 conjuguée à la position du pivot 24 de la grille permet, sous certaines conditions connues de l'homme de métier, de commander l'entraînement et le positionnement de la grille 23 uniquement par la résultante des forces aérodynamiques du flux sur la structure des aubes 25. Un système de rappel automatique peut être ajouté à ce principe pour fiabiliser la manoeuvre de l'ensemble notamment lors de la refermeture de la porte 3.

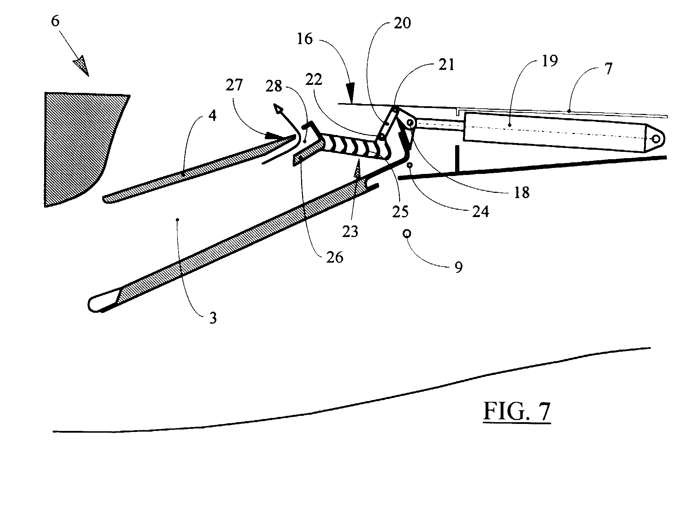

Au cours de la manoeuvre d'ouverture selon la figure 7 le déflecteur 26 passe d'une position inactive interne à une position active externe. Selon la définition géométrique appliquée en amont de sa structure comme sur l'exemple montré sur les figures, un espace 28 est crée entre l'amont du déflecteur 26 et l'aval 27 de la structure externe 4 de la porte 3. L'épaisseur du déflecteur 26 et la définition du bord 27 peuvent être adaptées pour augmenter l'espace 28. Cette particularité de l'invention offre une section plus importante d'échappement du flux d'inversion notamment dans la phase sensible dite de transit à cinquante pour cent pour laquelle les résultats habituels de comparaison entre la section d'entrée du flux fan et la section d'échappement montrent une légère déficience pouvant créer quelques perturbations dans le fonctionnement du turboréacteur.

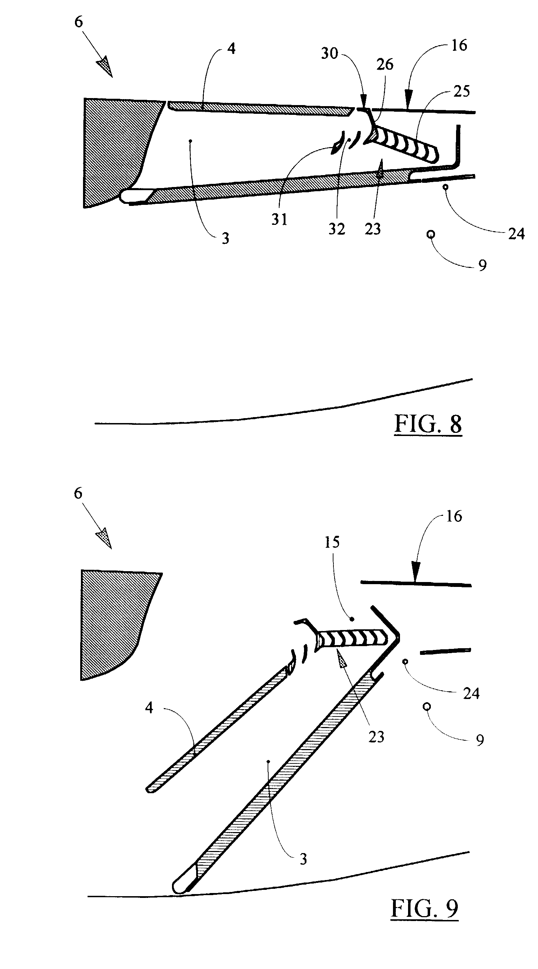

Les figures 8 et 9 montrent un exemple d'arrangement possible de l'invention appliqué notamment au déflecteur 26. Une manière d'augmenter la hauteur utile du déflecteur 26 lors de l'inversion est d'amener l'interface externe dudit déflecteur au contact de la surface externe de la nacelle, l'externe 30 du déflecteur 26 forme alors une partie des lignes externes de la nacelle. Préférentiellement en position jet inversé l'amont de l'aube amont 31 vient en lieu et place de l'externe 30 du déflecteur 26.

De plus cette disposition permet d'augmenter de la section d'échappement 15 en amont par l'extension possible de la structure amont du pied du déflecteur 26 sans allonger la partie amont de la casquette 16 évitant ainsi d'obstruer une partie de la section aval de sortie d'échappement 15 de la porte en jet inversé.

Le pied du déflecteur 26 peut comporter au moins une ouverture 32 simple ou associée à au moins une aube 31 de manière à orienter la partie du flux inversé traversant ladite ouverture selon une direction recherchée. Cette ouverture peut être radialement étendue d'un bord latéral à l'autre du becquet 26.Elle peut être partielle, en plusieurs secteurs, positionnée radialement comme sur l'exemple ou longitudinalement. La partie du déflecteur 26 faisant bouclier au flux peut aussi comporter les mêmes artifices.

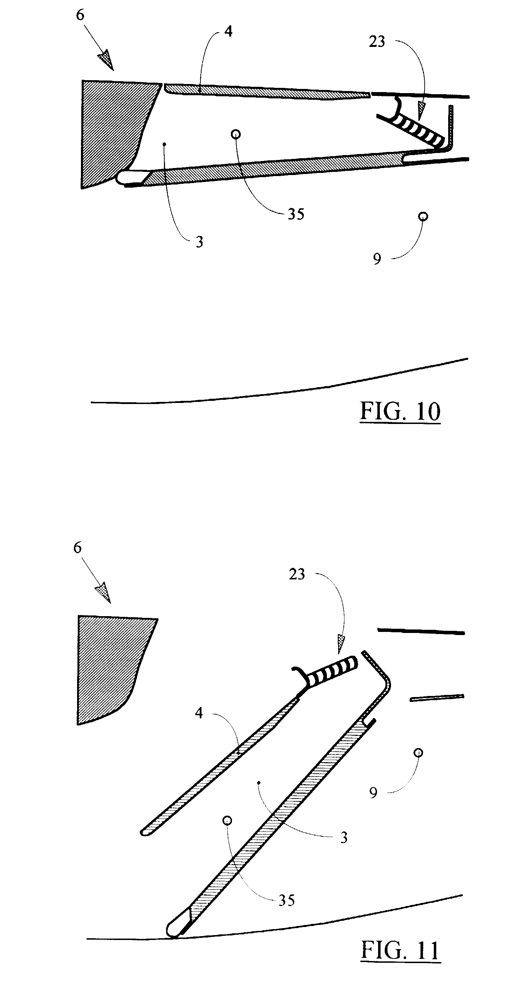

Les figures 10 et 11 représentent un exemple du mode de réalisation de l'invention dont la position de l'axe de rotation 35 de la grille 23 se place en amont du pivot 9 de la porte 3. Le pivot 35 se situe à l'intérieur de la structure interne de la porte.

Avantageusement le pivot 35 peut se situer dans une position intermédiaire de la largeur de la grille mobile 23. Il peut être placé sur les cloisons de renforcement structural ou de déviation du flux contenues dans la structure interne de la porte 3 définis dans le type d'inverseur à portes formant écopes qui a fait précédemment l'objet d'une description.

La définition et les paramètres couvrants ce mode de l'invention sont identiques à ceux définis dans le mode de réalisation de l'invention de grille mobile à pivot placé en aval du pivot de porte.

Suivant les applications particulières, la porte 3 peut en outre comporter une partie de structure de grille fixe qui coopère avec la grille mobile 23 pour assurer le guidage et la déviation du flux inversé.

## Revendications

1. Inverseur de poussée de turboréacteur à double flux comportant des portes creuses pivotantes (3), constituant en position fermée, lors d'un fonctionnement en jet direct, une partie du capotage extérieur de la nacelle et après pivotement sous l'action d'un moyen de commande des déplacements, le bord amont de porte pénétrant dans le flux, les portes (3) constituant des obstacles de déviation du flux en dégageant un passage dans le capotage extérieur, lors d'un fonctionnement en inversion de poussée, au moins une partie du flux dévié empruntant le conduit interne (10) ou tuyère de la porte (3) formant écope caractérisé en ce que ladite porte (3) est associée à au moins une grille déflectrice mobile (23) constituée d'aubes, articulée autour d'un pivot (24; 35) et dont au moins la partie amont formant déflecteur (26) vient en débordement de la surface externe du panneau externe (4) de la porte (3) en mode d'ouverture de la porte (3), de manière à éviter toute interférence entre le flux d'échappement sortant de la porte (3) et le flux dévié à l'extérieur de la porte (3) en position ouverte.

2. Inverseur de poussée de turboréacteur à double flux selon la revendication 1 caractérisé en ce que ledit pivot (24) d'articulation de la grille mobile (23) est porté par la structure de porte (3) en aval, dans la position de jet direct, du pivot (9) de porte.

3. Inverseur de poussée de turboréacteur à double flux selon l'une des revendications 1 ou 2 caractérisé en ce que ladite grille mobile (23) est stockée, en position de jet direct, à l'intérieur de la structure de porte (3).

4. Inverseur de poussée de turboréacteur à double flux selon l'une quelconque des revendications 1 à 3 caractérisé en ce que le pied du déflecteur amont (26) se place dans le prolongement de la structure externe (4) de la porte (3) dans la position de jet inversé.

5. Inverseur de poussée de turboréacteur à double flux selon la revendication 4 caractérisé en ce que les définitions géométriques de la partie aval (27) de la structure externe (4) de porte (3) et du déflecteur amont (26) sont déterminées de manière à laisser un espace (28) de passage d'une partie de flux pendant la manoeuvre de la porte (3).

6. Inverseur de poussée de turboréacteur à double flux selon l'une quelconque des revendications 1 à 5 caractérisé en ce que le déflecteur amont (26) comporte une partie externe (30) qui, en position de jet direct, forme une partie de la surface externe de nacelle, en aval de la structure externe (4) de la porte (3).

7. Inverseur de poussée de turboréacteur à double flux selon l'une quelconque des revendications 1 à 6 caractérisé en ce que le pied amont du déflecteur (26) comporte au moins une ouverture (32) associée à au moins une aube (31).

8. Inverseur de poussée de turboréacteur à double flux selon l'une quelconque des revendications 1 à 7 caractérisé en ce que le système de commande (19) des déplacements de la porte (3) entraine également la grille mobile (3) en pivotement autour de son pivot (24).

9. Inverseur de poussée de turboréacteur à double flux selon la revendication 8 caractérisé en ce que l'extrémité de tige du vérin (19) de commande de la porte (3) est reliée par au moins une bielle (20) à la grille mobile (3).

10. Inverseur de poussée de turboréacteur à double flux selon l'une quelconque des revendications 1 à 7 caractérisé en ce que le pivotement de la grille mobile (23) vers l'ouverture est obtenu sous l'effet des forces aérodynamiques du flux sur les aubes (25) de la grille, un système élastique de rappel automatique assurant le retour en position de jet direct.

11. Inverseur de poussée de turboréacteur à double flux selon l'une quelconque des revendications 1 et 3 à 7 caractérisé en ce que ledit pivot (35) d'articulation de la grille mobile (23) est porté par la structure de porte (3), en amont du pivot (9) de porte, dans la position de jet direct.
